# EUROPEAN PATENT SPECIFICATION

(11) **EP 1 781 009 B1**
(45) Date of publication and mention of the grant of the patent: **16.07.2008**
(21) Application number: 05109933.1
(22) Date of filing: 25.10.2005
(51) Int. Cl.: H04N 1/32, G06T 1/00

(54) **Image Stitching For Mobile Electronic Devices**
Aneinanderheften von Bildern für mobile elektronische Vorrichtungen
Attachement d images pour dispositifs électroniques mobiles

(43) Date of publication of application: 02.05.2007
(73) Proprietor: Research In Motion Limited, Waterloo, Ontario N2L 3W8 (CA)
(72) Inventor: Klassen, Gerhard D, N2T 1H7, Waterloo, (CA); Tapuska, David, N2T 2T7, Waterloo, (CA)
(74) Representative: Rickard, David John

(56) References cited:
- WO-A-20/04052035
- BUTLERBLOG, CHAD BUTLER?S WEBLOG: "Further Optimization of the W3C Validation Images"[Online] 13 June 2005 (2005-06-13), XP002378110 Retrieved from the Internet: URL:http://www.tradespotter.com/wp/?p=34> [retrieved on 2006-04-24]
- "Optimizing Web Graphics" WEBSITE OPTIMIZATION, [Online] 2003, XP002378111 Retrieved from the Internet: URL:http://www.websiteoptimization.com/spe ed/12/> [retrieved on 2006-04-24]
- "CSS Sprites, Background Images and Website Optimization" FIFTYFOURELEVEN.COM, [Online] 13 May 2004 (2004-05-13), XP002378112 Retrieved from the Internet: URL:http://www.fiftyfoureleven.com/sandbox /weblog/2004/may/css-sprites-images-optimi zation/> [retrieved on 2006-04-24]
- "Design Considerations" SAN DIEGO STATE UNIVERSITY WEB STYLE GUIDE, [Online] 2004, XP002378113 Retrieved from the Internet: URL:http://www.sa.sdsu.edu/communications/ styleguide//general-1.html> [retrieved on 2006-04-24]
- ROSS SHANNON: "Logical Optimising" WWW.YOURHTMLSOURCE.COM, [Online] 2 February 2005 (2005-02-02), XP002378114 Retrieved from the Internet: URL:http://www.yourhtmlsource.com/optimisa tion/imageoptimisation.html> [retrieved on 2006-04-24]

## Description

The present application relates to preparing content for delivery to mobile electronic devices, and in particular to the preparation of content including image data to mobile electronic devices.

The communications link between a wireless enabled mobile electronic device and a content source often includes a communications channel that has a delivery capacity that is less than that typically available between a stationary device and a content source. Additionally, mobile devices will often have on-board resources, such as memory for example, that are less than that of a stationary devices.

The use of mobile devices to wirelessly receive and view enriched content including images is expanding. However, content that has been created for wider bandwidth communications channels and memory rich devices can be cumbersome to receive and use in the limited bandwidth and limited memory environment of mobile communications.

Accordingly, a content delivery system and method that provides for improved efficiency in the delivery and use of content for mobile devices is desirable.

Downloadable content such as Internet webpages and mobile device applications often make use of several small images that consume significant wireless network bandwidth to download as well as significant storage space on the mobile device. Among other things, the present application describes methods, devices, and computer program products in which images from separate image files obtained from a content source are combined into a single image file for transmission over a communications channel and/or use on a mobile electronic device.

Image optimisation techniques such as that disclosed in "Further Optimization of the W3C Validation Images" 13^{th} June 2005 [online], Butlerblog, Chad Butler's Weblog, http:/lwww.tradespotter.com/wp/?p=34> are applied at the authoring stage in website creation.

### GENERAL

In one aspect, the present application provides an automated method for use on a wireless connector system (114) for interfacing between a content source (118,122) and a wireless network (110) servicing a plurality of mobile electronic devices (10), the automated method for modifying content for use on one or more of the mobile electronic devices. The method includes (a) receiving at the wireless connector system content from the content source that includes (i) a plurality of content image files each including graphics information for generating an associated image and (ii) computer instructions including references to the plurality of image files for causing the associated images to be displayed on a display screen; (b) selecting from the content image files a plurality of image files that can be combined together to form a single image file that will have a smaller file size than the sum of the file sizes of the selected image files; (b) selecting from the content image files a plurality of image files and combining the selected image files into a single merged image that has a smaller file size than the sum of the file sizes of the selected image files; (c) amending the computer instructions to accommodate the merged image file; (d) providing the merged image file and the amended computer instructions to at least one of mobile electronic devices.

In another aspect, the present application provides a wireless connector system for interfacing between a content source and a wireless network servicing a plurality of mobile electronic devices and a computer as defined in the appended claims.

### BRIEF DESCRIPTION OF THE DRAWINGS

Embodiments will now be described, by way of example only, with reference to the attached Figures, wherein:

Figure 1 is a block diagram of a communications system to which embodiments may be applied;

Figure 2 is a block diagram showing a method for processing image and instruction files associated with a Webpage, according to example embodiments ;

Figure 3 shows an example of a simple webpage for explaining embodiments of the invention;

Figure 4 shows an example of an HTML file for displaying the simple webpage of Figure 3;

Figure 5 shows a representation of a simple merged image for explaining embodiments of the invention;

Figure 6 shows a first example of a modified HTML file for displaying the simple webpage of Figure 3;

Figure 7 shows a further example of a modified HTML file for displaying the simple webpage of Figure 3;

Figure 8 shows an example of image information embedded in a merged image file for the simple webpage of Figure 3;

Figure 9 shows a further example of a modified HTML file for displaying the simple webpage of Figure 3;

Figure 10 shows a further example of a modified HTML file for displaying the simple webpage of Figure 3;

Figure 11 shows examples of a further images for explanatory purposes;

Figure 12 shows a merged version of the images of Figure 11 for explanatory purposes;

Figure 13 is a block diagram showing a method for processing image and instruction files associated with an application, according to example embodiments ;

Figure 14 is a block diagram showing an example of a method for identifying image files for merger and merging such files;

Figure 15 is a block diagram showing an example of a mobile electronic device that can be used in the communications system of Figure 1.

Like reference numerals are used throughout the Figures to denote similar elements and features.

### DESCRIPTION OF PREFERRED EMBODIMENTS

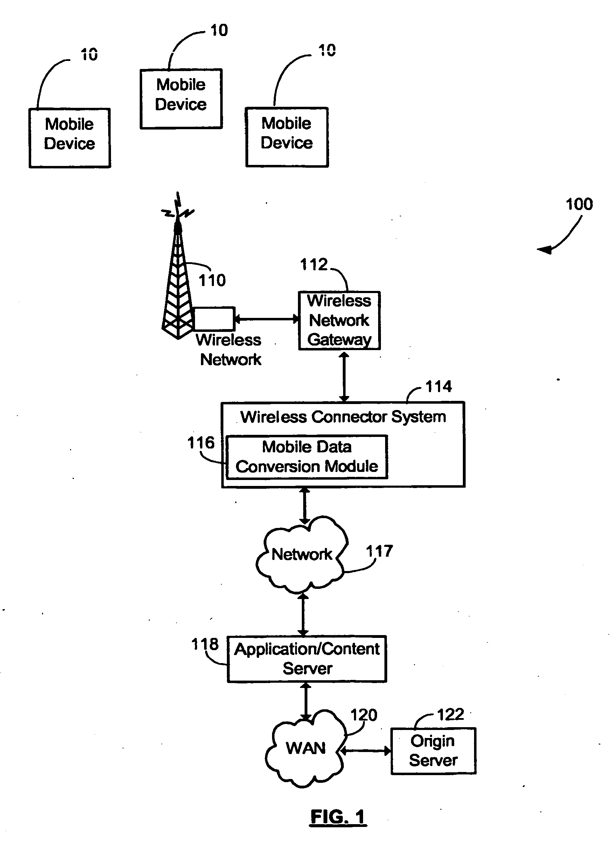

Referring first to Figure 1, there is a block diagram of a communication system 100 to which example embodiments of the present application may be applied. The communication system 100 includes mobile electronic devices 10, a wireless network 110 for communicating with the mobile electronic devices 10, and a wireless network gateway 112 for interfacing with a wireless connector system 114 that is connected to a client network 117. The client network 117 may include a local area network, an intranet, the Internet, a direct connection, and combinations thereof, however in at least some example embodiments client network 117 will be an intranet for a corporation or organization. An application/content server 118 may be connected to the client network 117 and also to a further network such as a Wide Area Network (WAN) 120. The WAN 120 may connect with other networks, and the WAN 120 can in various embodiments include the Internet, a direct connection, a local area network (LAN), a wireless communication link, and any combinations thereof. Content providers, such as web servers, may be connected to the WAN 120, an example of which is shown in Figure 1 as origin server 122.

In one example embodiment, mobile electronic devices 10 are handheld two-way mobile communication devices 10 having at least data and possibly also voice communication capabilities. In an example embodiment, the devices 10 have the capability to communicate with other computer systems on the Internet. In various embodiments, mobile electronic devices 10 may include, by way of non limiting example, data communication devices, multiple-mode communication devices configured for both data and voice communication, mobile telephones, mobile communication devices, PDAs enabled for wireless communications, and wireless modems operating in conjunction with computer systems. In the presently described embodiment, each of the mobile electronic devices 10 is configured to operate within the wireless network 110.

Wireless mobile network 110 is, in an example embodiment, a wireless packet data network which provides radio coverage to mobile electronic devices 10, and could be a number of different types of network including by way of non-limiting example, Mobitex Radio Network, DataTAC , GSM (Global System for Mobile Communication), GPRS (General Packet Radio System), CDMA (Code Division Multiple Access), iDEN or various other third generation networks such as EDGE (Enhanced Data rates for GSM Evolution) or UMTS (Universal Mobile Telecommunications Systems).

The wireless network gateway 112 provides translation and routing services between one or more wireless connector systems 114 and wireless networks 110 to facilitate communication between mobile devices 10 and devices connected, directly or indirectly, to wireless connector system 114. The wireless connector system 114 is a server that in at least some examples is located behind a firewall and provides access for mobile devices 10 to the devices connected, for example through intranet 117, to the wireless connecter system 114. The wireless connector system 114 includes a mobile data conversion module 116 that coverts content and information received from devices connected to wireless connector system 114 into a format more suitable for transmission over wireless network 110 to mobile electronic devices 10. In at least one embodiment, the data conversion module 116 is implemented through computer program instructions that reside on a persistent storage on the wireless connector system 114, and which are executed by one or more microprocessors. In some embodiments, the data conversion module 116 could be implemented on a separate computer than the wireless connector system 114. In an example embodiment, the data conversion module 116 provides HTTP connectivity between the wireless network 110 and devices and/or networks connected directly or indirectly to wireless connector system 114. The network 117, application/content server 118, WAN 120 and origin server 122 are collectively and/or individually or in various combinations a content source for the wireless connector system 114. The system shown in Figure 1 is but one possible configuration for a communications system on which embodiments of the invention may be implemented.

According to example embodiments of the invention, content received by the data conversion module 116 that is destined for a mobile electronic device is converted into a format that is more suitable for transmission over a limited bandwidth communications channel available in wireless network 110. In at least some example embodiments discrete images contained in Internet web pages are merged by the data conversion module 116 into a single image for download over the wireless network 110. In at least some example embodiments, images used in applications that are being loaded onto a mobile electronic device 10 are merged by the data conversion module 116 prior to loading onto the mobile electronic device 10. In example embodiments, images with a relatively common dimension and/or color space may be merged into a single image having a size less than that of the cumulative sizes of the separate images. In the combined image, the overhead of the graphics header and color lookup information is required only once for the combined image, rather than for each separate image. In addition, the compression used in common image file formats such as PNG (Portable Network Graphics), JPEG (Joint Photographic Experts Group) and GIF (Graphics Interchange Format) is improved in many cases when there is more image data in a particular file.

As will be explained in greater detail below, the mobile data conversion module 116 is configured to analyse a set of images and select appropriate images to be "stitched" or combined together to reduce cumulative file size. In the case of a webpage, the HTML (Hyper Text Markup Language) or other instructions used to represent the webpage are also modified by the mobile data conversion module 116 to reference a part of the stitched image in place of individual images. In the case of a software application, the application code referring to the individual images are similarly modified by the mobile data conversion module 116 to refer to a part of the stitched image in place of individual images. For example, an XML (Extensible Markup Language) style sheet used to generate a graphical user interface for an application can be modified by the mobile data conversion module 116.

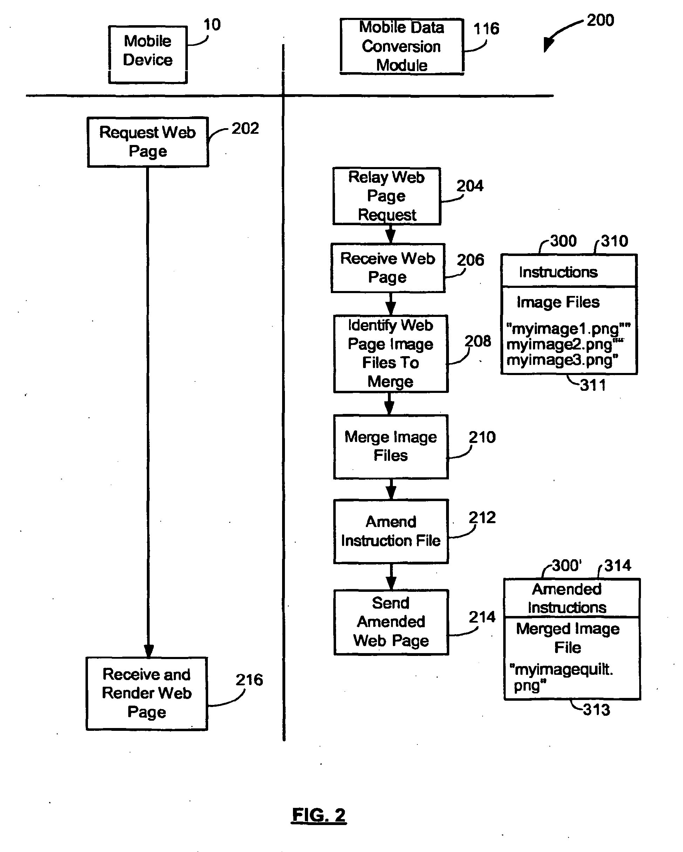

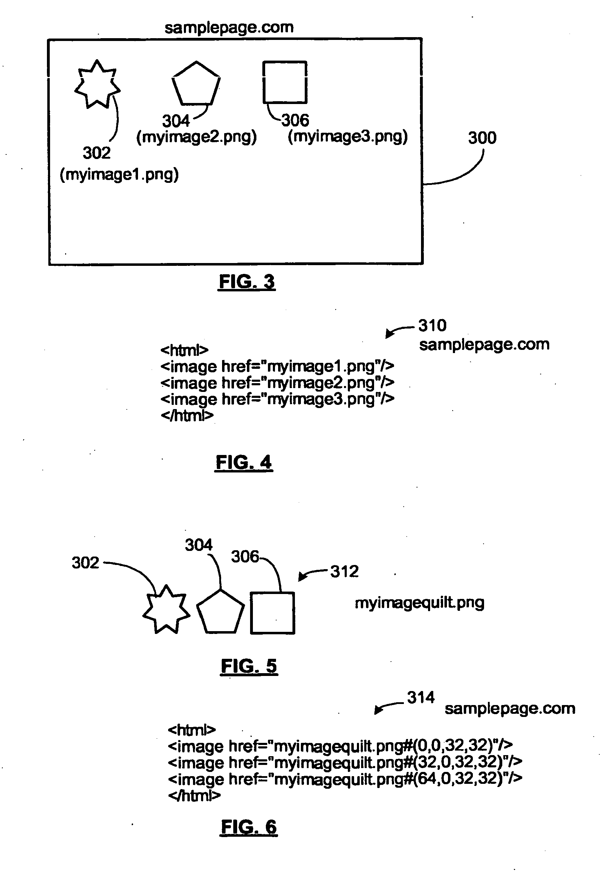

Figure 2 provides a block diagram overview showing method 200 for processing of image and instruction files associated with a Webpage according to example embodiments of the invention. Method 200 will be described in the context of a non-limiting example with reference to Figures 3 and 5, which show a simple webpage and representation of a merged image file, respectively. In the method 200, as indicated in step 202, a mobile electronic device 10 having a Web browser transmits a webpage request over wireless network 110.

With reference to Figures 2 and 3, in the presently described example, the requested webpage is "samplepage.com" 300, which includes three similar sized and similar color themed images, namely a star 302, a pentagon 304, and a square 306. As known in the art, the information needed for rendering the Webpage "samplepage.com" 300 will typically include an instruction file 310 and associated image files 311. The instruction file may be an HTML file which defines the structure and layout of a Web document by using a variety of tags and attributes, which in turn refer to image files. In the present example, Figure 4 shows a very simple HTML source file 310 for generating the Webpage samplepage.com 300. The instruction file 310 references thee image files, namely myimage1.png which includes graphic information for rendering the star 302; myimage2.png which includes graphic information for rendering the pentagon 304; and myimage3.png which includes graphic information for rendering the square 306. Although PNG graphics files are used in the present example, embodiments of the invention could also be used with different graphic file formats such as JPEG or GIF for example.

Turning again to Figure 2, the webpage request from mobile device 10 is routed through the wireless network 110 and wireless network gateway 112 to the data conversion module 116 of a wireless connector system 114. As indicated in step 204, the data conversion module 116 relays the webpage request to the source of the web page. In one example, the webpage request may be routed through client network 117, application/content server 118, and Internet 210 to an origin server 122 on which the requested webpage resides. In some examples, the application/content server 118 or another server connected to the data conversion module 116 through client network 117 could be the origin server. As indicated in step 206, the data conversion module 116 receives the requested webpage, including the HTML file 310 and referenced image files myimage1.png, myimage2.png and myimage3.png from the content source.

As indicated in step 208, once the data conversion module 116 receives the requested webpage it automatically identifies images within the subject webpage for merging. In example embodiments images are selected for merging into a larger image based on predetermined merger rules such that the image file defining the merged image will generally have a smaller file size than the sum of individual image files that define the individual images that are being merged. In one example embodiment, all images having a same or similar common dimension, for example images having the same height in pixels are selected for merging and then any remaining images having the same width in pixels are selected for merging. In some example embodiments, the images do not need the same dimension, but require a similar dimension - for example images falling within a predetermined variance in height in pixels may be merged, and images falling within a predetermined variance in width in pixels may be merged.

It will be understood by those skilled in the art that images are often saved in format that includes indexes into a color table or palette instead of raw color information. For example, GIF and PNG files are typically saved in a paletted color image format, whereas JPEG files are full color image files. If several images having different colors are merged, then in some circumstances the resulting merged image file may have a larger file size than the sum of the individual images. Thus, in some embodiments, image color is taken into consideration when selecting files for merger in that images having similar colors are selected for merger and images lacking a commonality of color within predetermined thresholds are rejected as merger candidates. In some example embodiments, a combination of characteristics are considered when selecting images for merger - for example, files having both a same or similar common dimension and a similar color scheme (within predetermined limits established for determining a similar color scheme) are selected for merging.

In some example embodiments, the images selected for merging do not need to have common dimensions, but rather just be able to be combined together into a larger image that has a smaller resulting file size than the sum of the files of the individual images. Such a combination may be achieved simply by an automated repetitive trial and error process in which the size of the combined file is compared against the size of the individual files or by more involved algorithms. In some example embodiments as will be explained in greater detail below, images having common sub-areas may be merged with the sub-areas overlapping.

In the example webpage 300 of Figure 3, each of the images 302, 304 and 306 are 32 pixels wide and 32 pixels high and share a common colour palette. Accordingly, their respective image files myimage1.png, myimage2.png and myimage3.png are selected for merger by data conversion module 116. The use of a series of images having common dimensions and colors is relatively common on web pages - for example similar images may be used as headings or topic dividers throughout a webpage. Accordingly, combining images having a common dimension and/or similar color scheme will often result in a smaller cumulative file size for a webpage. Similarly, applications often use similar colors and dimensions for visual images associated with the same skin or theme, and thus combining images having a common dimension and/or similar color scheme will often result in a smaller cumulative file size for an application. As indicated in step 210, once the image files for merger have been selected they are then merged by the data conversion module 116. In one example embodiment, images having the same height are merged into a single image in which the formerly separate images are arranged adjacent each other in a row. By way of example, Figure 5 shows the merged image 312 that includes the star 302, pentagon 304 and square 306 image elements of the previously separate images arranged in a row that is 96 pixels wide and 32 pixels high. The graphic information for generating the merged image 312 is contained in merged image file myimagequilt.png, which, when header information and other file overhead is taken into account, has a total file size less than that of the separate image files myimage1.png, myimage2.png and myimage3.png. In some embodiments, images of common width are merged into an image in which the formerly separate images are arranged adjacent each other in a column - for example, the images 302, 304 and 306 could alternatively be arranged in a column rather than a row. In various other embodiments, the images are merged in different merged image configurations - for example, rows and columns of images could be packed into a rectangular shaped image that includes an array of merged images.

As indicated in step 212 of Figure 2, in order to allow the merged images to be correctly displayed at the target mobile device, the webpage instructions that refer to the original individual images are automatically modified to by the data conversion module 16. There are a number of ways that the webpage source code could be modified by data conversion module 16. In one example embodiment, when merging the individual images the data conversion module 116 keeps track of the relative location of the original images within the merged image and the image href attributes in the HTML source file are modified to indicate a portion of the merged image to be rendered at each location. By way of example, Figure 6 shows a modified HTML source file 314 created by the mobile data conversion module 116 for the generating the webpage 300 (samplepage.com) from merged image file myimagequilt.png. In the modified file 314, the rectangular (X, Y) coordinates of the original images 302, 304 and 306 within the merged image 312 are specified so that the web browser at the mobile device 10 can extract the original images from the merged images. Such an embodiment requires that the web browser on the mobile device 10 be configured during a set up or updating process to recognize the appended coordinate data in the modified HTML file. In embodiments where images of a common height are always merged horizontally into a row, then only X coordinate information may be required in the coordinate data, and similarly in embodiments where images of a common width are always merged vertically into a column, then only Y coordinate information may be required in the coordinate data.

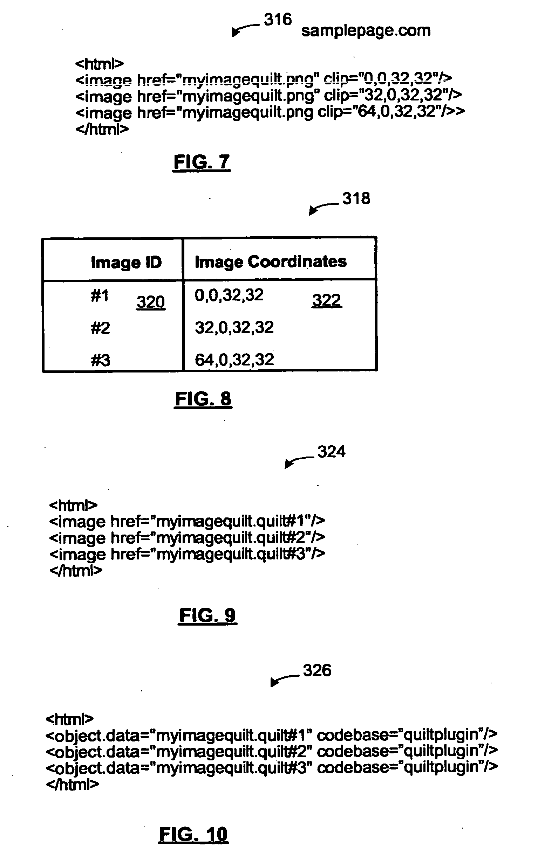

A similar coordinate based modification method is to modify the webpage instruction file to use a custom image tag to indicate what region of the merged image to render, and in this regard, Figure 7 shows a further example of a modified HTML source file 316 for rendering the webpage 300 (samplepage.com) from the merged image file myimagequilt.png. In such embodiment, the web browser on mobile device 10 is configured to recognize the custom tags.

In yet another example embodiment, information specifying the location of the individual images within the merged image embedded within the merged image file itself when the merged file is created by the data conversion module 116 in step 210. In such an embodiment, the merged image file could be a custom format having a predetermined file extension (eg.".quilt"), with the merged image file having a name like "myimagequilt.quilt". The custom format could, for example, be the similar to a common format such as .png format, but include extra information in a custom header field identifying the locations of the individual images within the merged image. By way of reference to Figure 8, the image file myimagequilt.quilt may include in its header a table 318 of image information which contains an index of images, each referred to by an assigned identification ID 320 (#1, #2 and #3, corresponding to star 302, pentagon 304 and square 306 in the present example) that is mapped to a specific location (coordinates 322). In such an example, in step 212, the webpage source code is automatically amended by the data conversion module 116 to refer to the merged image file and the assigned ID's for the respective image. By way of example, Figure 9 shows a further example of a modified HTML source file 324 for rendering the webpage 300 (samplepage.com) from the custom merged image file myimagequilt.quilt. The browser on the mobile device 10 is pre-configured, through a plug-in for example, to recognize the custom format. Alternatively, the HTML source file may be modified in step 312 to replace image element references with <object> or <embed> elements, and in this regard Figure 10 shows a further example of a modified HTML source file 326 for rendering the webpage 300 (samplepage.com) from the custom merged image file myimagequilt.quilt

Referring again to Figure 2, once the requested web page has been processed by the data conversion module 116 to merge the image files and amend the webpage source code (instruction file), the amended webpage 300' (which includes the merged image file 313 and the amended instruction file 314) is then sent over the wireless network 110 to the requesting mobile device 10. Device 10 which then renders the webpage on its display screen according to the modified instructions.

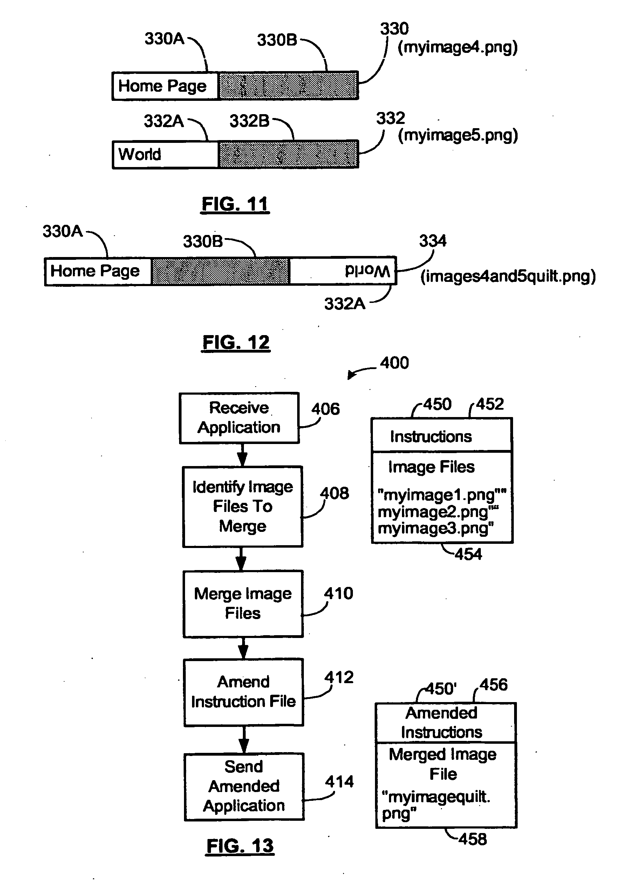

Although a number of different examples have been described above in terms of image combing techniques, other combining methods are also possible. For example, in some cases images may have common sub-regions which are identified and then overlapped in the merged image in order to avoid duplication of graphics information common to the images. By way of example, Figure 11 shows two example images 330 and 332 associated with the image files "myimage4.png" and "myimage5.png". The image 330 has sub-regions 330A and 330B, and the image 332 has sub-regions 332A and 332B. In one example embodiment, during identification step 208, the data conversion module 116 using a comparison algorithm determines that images 330 and 332 in a requested webpage have a common width (i.e. along the x axis) and height (i.e. along the Y axis), and furthermore, have common sub-areas 330B and 332B, and that the sub-area 332B, when rotated 180 degrees, is still identical to sub-area 330B. In such embodiment, the conversion module merges images 330 and 332 by inverting sub-image 332A and attaching it to the end of the image 330, and cutting the data associated with common image sub-region 332B, forming merged image 334 which is described in merged graphic file "images4and5quit.png". The source code for the webpage is amended in step 212 so that previous references to image file "myimage4.png" refer to sub-regions 33A and 330B of the merged image 334 and previous references to image file "myimage5.png" refer to sub-regions 332A and 330B, rotated 180 degrees, of the merged image 334.

Thus, it will be appreciated by the example of Figures 11 and 12 that in some example embodiments identical regions of separate images that are to be merged can be identified and the images combined so that the image data for the common regions is only included once in the merged image. Additionally, in some example embodiments, images may be rotated or transformed in order to achieve efficient packing of the individual imaged into the merged image.

As indicated above, the image combining methods of the present invention can also be applied to applications that are loaded onto a mobile device 10. Applications may be downloaded to the device 10 over wireless network 110, in which case it is desirable to minimize file size to reduce consumption of communications channel resources and device on-board memory. Alternatively, in some embodiments, applications may be loaded onto the device 10 through wired link such as a docking station or a short range wireless link such as a wireless LAN having a higher bandwidth channel than network 110. In such cases, reduced file size is still desirable to limit consumption of on-board memory. In some configurations, a downloaded file is not an entire application, but rather a file or files used by an application on the device to generate visual images in a graphical user interface. For example, the downloaded file could be a theme file that includes a number of image files and instructions, including for example, a style sheet that refers to the image files. The theme file can be used by an application on the device to generate a themed user interface.

Figure 13 shows a method 400 used by data conversion module 116 when converting an application (including for example a theme file) according to example embodiments. Application conversion method 400 is similar to webpage conversion method 200 described above, and begins, as indicated in step 406, with the data conversion module 116 receiving from a source an application (or theme file) 450 destined for a mobile device 10. The application includes both a source code instructions 452 and image files 454 that are referenced in the instructions 452. In the case of a theme file, instructions 452 could be in the form of an XML style sheet. The data conversion modules goes through steps of identifying image files for merger (step 408) and merging the identified image files (step 410) in a substantially identical manner to which image files are identified and merged in webpage conversion method 200 described above. The application instructions, e.g. source code, (or style sheet in the case of a them file) is then automatically amended by the data conversion module 116, as indicated in step 412, to reference the appropriate sub-portions of the merged image file 458. In one example embodiment, the instructions are are amended so that references to the individual image files 454 are replaced with references to corresponding sub-regions of the merged image file - for example, using the coordinate system discussed above, a reference to "myimage1.png" is changed to "myimagequilt.png#(0,0,32,32)". Alternatively, further code could be added to the source code such that when the application requests an original image file "myimagel.png", the appropriate portion of the merged image is returned instead. Additionally, the other instruction and/or image file modification techniques discussed above in the context of webpages could also be applied to applications.

As indicated in step 414, the amended application 450' (or theme file), including its amended instructions 456 and image file 458 is then sent to a mobile device 10 on which the application is implemented. As suggested above, the amended application 450' (or theme file) may be loaded on the device 10 in different ways in different embodiments, including for example through wireless network 110, through a sort range wireless network connection, or through a wired docking station link, among others.

Thus, the presently described methods and systems are concerned with reducing data provided to a mobile device 10 in an automated setting. In some embodiments, the modified content 300', 450' could include a plurality of merged image files, each of which includes a group of merged images.

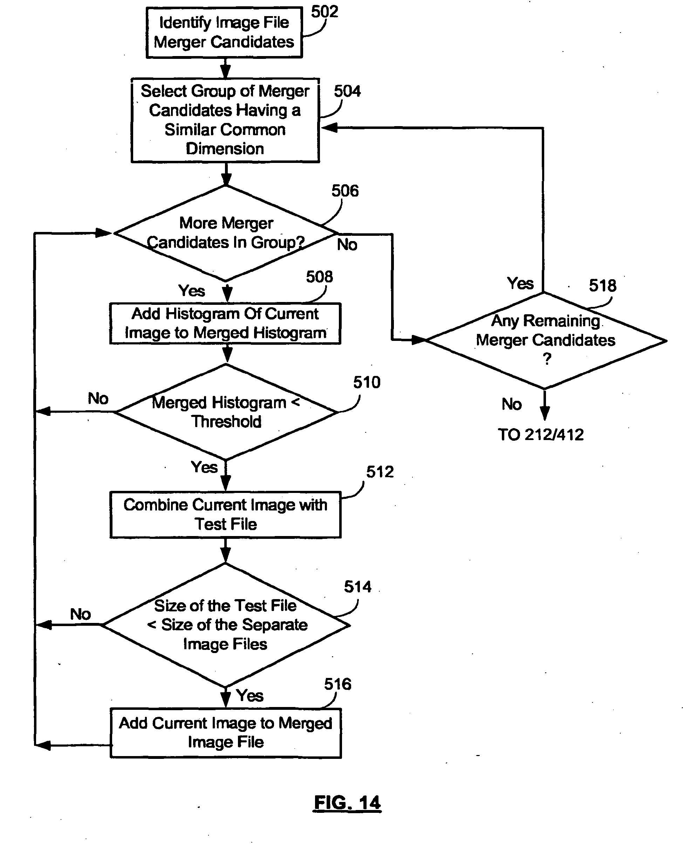

Various example embodiments for identifying and merging image files have been discussed above. One example methodology that can be implemented by mobile data conversion module 116 for merging and identifying image files in steps 208 and 210 of process 200 (and steps 408-410 of process 400) will now be described in greater detail with reference to Figure 14. As indicated at block 502 in Figure 14, all the image files that are referenced by an instruction set (which may, among other things, take the from of an HTML file defining a web page, source code for an application, or a XML style sheet) are identified as possible merger candidates. In some embodiments, one or more referenced image files may be excluded in step 502 as merger candidates based on predetermined conditions - for example, some image files may be known to be located already at the mobile device, and thus not required by the device.

Once all the image file merger candidates have been identified, an iterative process of identifying suitable files for merging is carried out, as indicated by steps 504 to 518. As indicated in step 504, the identified merger candidates are compared against each other to select a group of merger candidates having a similar common dimension - for example all images having a similar height (within a predetermined +/- tolerance) may be selected as potential merger candidates for a group. Alternatively or additionally, all images having a similar width (within a predetermined +/- tolerance) may be selected as potential merger candidates for a group. Once a selected group of images having a same or similar common dimension has been identified the images within that group are evaluated one at a time and suitable files within the group merged as indicated at steps 506-516. In the case of images saved in a paletted color image format, as indicated in steps 508 and 510, histograms of the colors used in the group merger candidates are examined to determine if, from a color perspective, merging of the merger candidate images within the selected group is justified. In particular, as each of the merger candidates within the group is being evaluated, as indicated in step 508 a histogram of the image currently being evaluated is combined with a merged histogram of the images within the group that have already been merged. As indicated in step 510, if the addition of the histogram of a current merger candidate within the group to the combined histogram results in a combined histogram exceeding the threshold, the merger candidate being evaluated is rejected from the selected group and placed back in the pool of possible merger candidates for possible inclusion in another selected group, and another merger candidate within the current group is evaluated. In the case where the merged histogram falls below the threshold size in step 510, the image that is currently being evaluated is combined with the merged image file for the selected group to form a test merged image file (step 512). In one example embodiment, the images within the selected group are combined horizontally when the similar dimension within the group is height, and vertically when the similar dimension is width. Alternatively, the images are combined in a two dimensional array in some embodiments. In some example embodiments, all three combing methods are performed for a group, and the method that produces the test file having the smallest file size is selected.

As indicated at step 514, once the image that is currently being processed is added to the test file, a check is made to ensure that the size of the merged test file image including the currently processed image is less than the sum of the size of the merged image file not including the currently processed image and the sizes of the image file for the currently processed image (i.e. the sum of the whole is less than the sum of the parts). In the event that the size of the test file exceeds the threshold, then the image currently being processed is rejected from the group and placed back in the pool of possible merger candidates for possible inclusion in another selected group, and another merger candidate within the current group is evaluated. As indicated in step 516, if the addition of the image currently being evaluated to the test file results in a file in which the size of the whole is less than the parts, then the image is added to a merged image file for the selected group. The coordinates of the image within the merged image file are tracked so that the instructions that referenced the image can be suitable amended. As can be appreciated from Figure 14, the processing steps 508-516 are carried out all image files in a selected group. When all the image file merger candidates in a selected group (i.e. those having a similar common dimension) have been processed, then as indicated in step 518, the another group of candidates is identified and the process continues until all image files that can be combined have been combined. It will be appreciated that the process of Figures 5 can be varied in a number of ways. For example, steps 508 and 510 would typically be omitted in the processing of full color images (as opposed to paletted images).

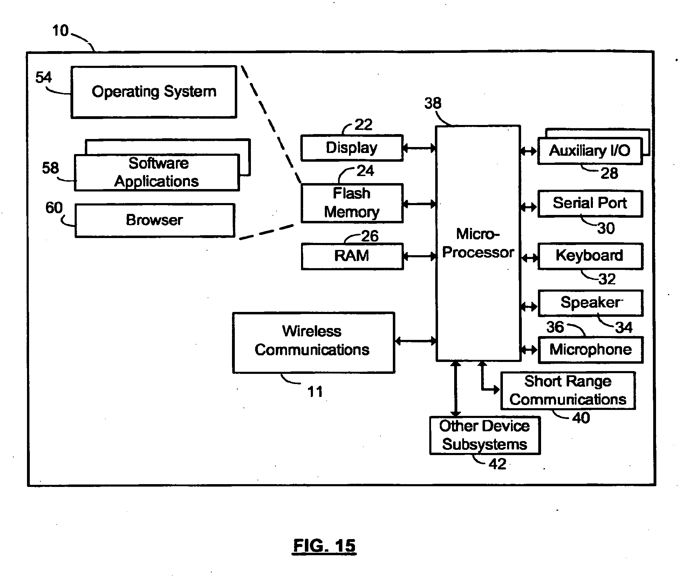

An example of a mobile electronic device 10 with which at least some embodiments of the invention may be used is shown in Figure 15. The device 10 includes a wireless communication subsystem 11 for two-way communications with wireless network 110. The device 10 includes a microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28 (which may include a thumb-wheel, for example), serial port 30 (which may include a USB port, for example), keyboard or keypad 32, speaker 34, microphone 36, a short-range communications subsystem 40, and any other device subsystems generally designated as 42.

Operating system software 54 and various software applications 58 used by the microprocessor 38 are, in one example embodiment, stored in a persistent store such as flash memory 24 or similar storage element. Software applications 58 may include a wide range of applications, including an address book application, a messaging application, a calendar application, and/or a notepad application. One application included among applications 58 in web-enabled embodiments of device 10 is a web browser 60. Each software application 58 may include layout information defining the placement of particular fields in the user interface for the software application 58, such as text fields, input fields, etc. Those skilled in the art will appreciate that the operating system 54, specific device applications 58, or parts thereof, may be temporarily loaded into a volatile store such as RAM 26. Received communication signals may also be stored to RAM 26.

The microprocessor 38, in addition to its operating system functions, enables execution of software applications 58 (which can include software applications 450') on the device. A predetermined set of applications 58 which control basic device operations, including at least data and voice communication applications for example, will normally be installed on the device 10 during manufacture. Further applications (for example applications 450') may also be loaded onto the device 10 through the network 110, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or webpage download will be processed by the communication subsystem 11 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystem 11.

The serial port 30 could be a USB type port implemented in a personal digital assistant (PDA)-type communication device for which synchronization with a user's desktop computer (not shown) may be desirable. Such a port 30 would enable a user to set preferences through an external device or software application and would extend the capabilities of the device by providing for information or software downloads, including user interface information, to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} or IEEE 802.11 b/g communication module to provide for communication with similarly enabled systems and devices.

The above-described embodiments of the present application are intended to be examples only. Alterations, modifications and variations may be effected to the particular embodiments by those skilled in the art without departing from the scope of the application, which is defined by the claims appended hereto.

## Claims

1. An automated method for use on a wireless connector system (114) for interfacing between a content source (118,122) and a wireless network (110) servicing a plurality of mobile electronic devices (10), the automated method for modifying content for use on one or more of the mobile electronic devices (10), comprising:
receiving, at the wireless connector system (114), content (300, 450) from the content source (118, 122) that comprises (i) a plurality of content image files (311, 454) each comprising graphics information for generating an associated image and (ii) computer instructions (310, 452) comprising references to the plurality of image files for causing the associated images to be displayed on a display screen (22);
selecting from the content image files (311, 454) a plurality of image files and combining the selected image files into a single merged image file (313, 458) that has a smaller file size than the sum of the file sizes of the selected image files;
amending the computer instructions (310, 452) to accommodate the merged image file;
providing the merged image file (313, 458) and the amended computer instructions (310,452) to at least one of the mobile electronic devices (10).

2. The method of claim 1 wherein in the selecting and combining step the images associated with the content image files (311,454) are analyzed to identify images having a same or similar common dimension, and the selected image files are those for which the associated images have been identified as having a same or similar common dimension.

3. The method of claim 2 wherein the common dimension comprises a common x-axis image width in pixels or a common y-axis image height in pixels.

4. The method of any one of claims 1 to 3 wherein in the selecting and combining step the images associated with the content image files are analyzed to identify images having a same or similar common dimension in pixels and having colour schemes falling within a predetermined similarity, and the selected image files are those for which the associated images have been identified as having a same or similar common dimension and colour schemes falling within a predetermined similarity.

5. The method of any one of claims 1 to 4 wherein said selecting and combining step comprises combining the individual images associated with the selected image files into a merged image (312, 334) that comprises each of the individual images in sub-regions thereof, the merged image file (313, 458) comprising graphic information for generating the merged image.

6. The method of claim 5 wherein the amending step comprises amending the computer instructions (310, 452) so that each reference to one of the selected image files is replaced with a reference to the merged image file (313,458) comprising information identifying the sub-region within the merged image (312, 334) that comprises the individual image associated with the selected image file.

7. The method of claim 6 wherein the information identifying sub-regions comprises coordinate data.

8. The method of claim 6 comprising assigning a unique image ID to each individual image in the merged image file and mapping each image ID to the sub-region in the merged image that comprises the individual image to which the image ID has been assigned, wherein the image ID's and mapping information are comprised in the merged image file; wherein the information identifying sub-regions comprises the unique ID's.

9. The method of any one of claims 5 to 8 wherein individual images having a common height are merged into a row in the merged image.

10. The method of claim 1 wherein said selecting and combing step comprises analyzing the images associated with the content image files to identify images having a common sub-region, and the selected image files comprise those for which the associated images have been identified as having a common sub-region; and combining the individual images associated with the selected image files into a merged image that comprises only a single occurrence of the common sub-region.

11. The method of any one of claims 1 to 10 wherein the content comprises a webpage, the method comprising a step of receiving a request for the webpage from the mobile electronic device, the computer instructions comprising code for a browser to render the webpage and in the step of providing the merged image file and the amended computer instructions the merged image file and the amended computer instructions are sent to the mobile electronic device over a wireless network.

12. The method of claim 11 comprising a step of relaying the request for the webpage received from the mobile electronic device to a content source.

13. The method of claim 11 or claim 12 comprising an initialization step of configuring a browser on the mobile electronic device to process the amended computer instructions.

14. The method of any one of claims 1 to 10 wherein the content comprises an application for the mobile electronic device (10).

15. A wireless connector system (114) for interfacing between a content source (118,122) and a wireless network (110) servicing a plurality of mobile electronic devices (10), the content source (118,122) providing content (300, 450) comprising (i) a plurality of content image files (311, 454) each comprising graphics information for generating an associated image and (ii) computer instructions (310, 452) comprising references to the plurality of image files for causing the associated images to be displayed on a display screen (22), the wireless connector system comprising (114):
a data conversion module (116) implemented on a computer for converting content into a format for communication over the wireless network, the data conversion module comprising:
selection means for selecting from the content image files (311, 454) a plurality of image files that can be combined together to form a single image file that will have a smaller file size than the sum of the file sizes of the selected image files;
combining means for combining the selected image files into a single merged image file (313, 458); and
amending means for amending the computer instructions (310, 452) to accommodate the merged image file;
the wireless connector system (114) being configured for sending the merged image file (313, 458) and the amended computer instructions (314, 456) over the wireless network to a mobile electronic device (10).

16. The system of claim 15 wherein the selection means is configured to analyze the images associated with the content image files to identify images having a common dimension falling within a predetermined similarity in number of pixels, and the selected image files are those for which the associated images have been identified as having a common dimension.

17. The system of claim 15 or claim 16 wherein the selection means is configured to analyze the images associated with the content image files to identify images having a common dimension falling within a predetermined similarity in number of pixels and having colour schemes falling within a predetermined similarity, and the selected image files are those for which the associated images have been identified as having a common dimension and colour schemes falling within a predetermined similarity.

18. The system of any one of claims 15 to 17 wherein the combining means is configure to combine the individual images associated with the selected image files into a merged image that comprises each of the individual images in sub-regions thereof, the merged image file comprising graphic information for generating the merged image.

19. The system of claim 18 wherein amending means is configured to amend the computer instructions so that each reference to one of the selected image files is replaced with a reference to the merged image file comprising information identifying the sub-region within the merged image that comprises the individual image associated with the selected image file.

20. A computer program product having a computer-readable medium embodying computer executable instructions for modifying content (300, 450) for use on a mobile electronic device (10), the content comprising (i) a plurality of content image files (311, 454) each comprising graphics information for generating an associated image and (ii) computer instructions (310, 452) comprising references to the plurality of image files (311, 454) for causing the associated images to be displayed on a display screen; the computer executable instructions comprising executable instructions for implementing the method of any one of claims 1 to 14.

## Patentansprüche

1. Automatisiertes Verfahren zur Verwendung in einem Drahtlosanschlusssystem (114) zum Herstellen einer Schnittstelle zwischen einer Inhaltsquelle (118, 122) und einem drahtlosen Netz (110), das eine Vielzahl mobiler elektronischer Vorrichtungen (10) verwaltet, wobei das automatisierte Verfahren zum Modifizieren von Inhalt zur Verwendung in einem oder mehreren der mobilen elektronischen Vorrichtungen (10) Folgendes umfasst:
Empfangen von Inhalt (300, 450) an dem Drahtlosanschlusssystem (114) von der Inhaltsquelle (118, 122), die (i) eine Vielzahl von Inhalt-Bilddateien (311, 454), von denen jede Graphikinformationen zum Generieren eines verknüpften Bilds umfasst, und (ii) Computerbefehle (310, 452) umfasst, die Referenzen zu der Vielzahl von Bilddateien zur Bewirkung dessen umfassen, dass die verknüpften Bilder auf einem Bildschirm (22) angezeigt werden;
Auswählen einer Vielzahl von Bilddateien aus den Inhalt-Bilddateien (311, 454) und Kombinieren der ausgewählten Bilddateien in einer einzelnen gemergten Bilddatei (313, 458), die eine kleinere Dateigröße als die Summe der Dateigrößen der ausgewählten Bilddateien aufweist;
Abändern der Computerbefehle (310, 452) zur Mitberücksichtigung der gemergten Bilddatei;
Bereitstellen der gemergten Bilddatei (313, 458) und der abgeänderten Computerbefehle (310, 452) für mindestens eine der mobilen elektronischen Vorrichtungen (10).

2. Verfahren nach Anspruch 1, wobei die mit den Inhalt-Bilddateien (311, 454) verknüpften Bilder beim Schritt des Auswählens und Kombinierens analysiert werden, um Bilder mit einer gleichen oder ähnlichen häufigen Dimension zu identifizieren, und die ausgewählten Bilddateien diejenigen sind, für die die verknüpften Bilder als eine gleiche oder ähnliche häufige Dimension aufweisend identifiziert worden sind.

3. Verfahren nach Anspruch 2, wobei die häufige Dimension eine häufige x-Achsenbildbreite in Bildpunkten oder eine häufige y-Achsenbildhöhe in Bildpunkten umfasst.

4. Verfahren nach einem der Ansprüche 1 bis 3, wobei die mit den Inhalt-Bilddateien verknüpften Bilder beim Schritt des Auswählens und Kombinierens analysiert werden, um Bilder mit einer gleichen oder ähnlichen häufigen Dimension in Bildpunkten und mit in einen vorher bestimmten Ähnlichkeitsbereich fallenden Farbenzusammenstellungen zu identifizieren, und die ausgewählten Bilddateien diejenigen sind, für die die verknüpften Bilder als eine gleiche oder ähnliche häufige Dimension und in einen vorher bestimmten Ähnlichkeitsbereich fallende Farbenzusammenstellungen aufweisend identifiziert worden sind.

5. Verfahren nach einem der Ansprüche 1 bis 4, wobei der Schritt des Auswählens und Kombinierens das Kombinieren der einzelnen mit den ausgewählten Bilddateien verknüpften Bilder in einem gemergten Bild (312, 334) umfasst, das jedes der einzelnen Bilder in Unterbereichen davon umfasst, wobei die gemergte Bilddatei (313, 458) Graphikinformationen zum Generieren des gemergten Bilds umfasst.

6. Verfahren nach Anspruch 5, wobei der Schritt des Abänderns das Abändern der Computerbefehle (310, 452) umfasst, so dass jede Referenz zu einer der ausgewählten Bilddateien durch eine Referenz zu der gemergten Bilddatei (313, 458) ersetzt wird, die Informationen umfasst, die den Unterbereich in dem gemergten Bild (312, 334) identifizieren, das das mit der ausgewählten Bilddatei verknüpfte einzelne Bild umfasst.

7. Verfahren nach Anspruch 6, wobei die Unterbereiche identifizierenden Informationen Koordinatendaten umfassen.

8. Verfahren nach Anspruch 6, das das Zuweisen einer eindeutigen Bildkennung an jedes einzelne Bild in der gemergten Bilddatei und das Abbilden jeder Bildkennung auf den Unterbereich in dem gemergten Bild umfasst, das das einzelne Bild umfasst, dem die Bildkennung zugewiesen worden ist, wobei die Bildkennungen und Abbildungsinformationen in der gemergten Bilddatei enthalten sind; wobei die Unterbereiche identifizierenden Informationen die eindeutigen Kennungen umfassen.

9. Verfahren nach einem der Ansprüche 5 bis 8, wobei einzelne Bilder mit einer häufigen Höhe in dem gemergten Bild in eine Reihe gemergt werden.

10. Verfahren nach Anspruch 1, wobei der Schritt des Auswählens und Kombinierens das Analysieren der mit den Inhalt-Bilddateien verknüpften Bilder umfasst, um Bilder mit einem häufigen Unterbereich zu identifizieren, und die ausgewählten Bilddateien diejenigen umfassen, für die die verknüpften Bilder als einen häufigen Unterbereich aufweisend identifiziert worden sind; und das Kombinieren der mit den ausgewählten Bilddateien verknüpften einzelnen Bilder in einem gemergten Bild, das nur ein einziges Vorkommen des häufigen Unterbereichs umfasst.

11. Verfahren nach einem der Ansprüche 1 bis 10, wobei der Inhalt eine Webseite umfasst, wobei das Verfahren einen Schritt des Empfangens einer Anforderung der Webseite von der mobilen elektronischen Vorrichtung umfasst, wobei die Computerbefehle Code für einen Browser zum Rendem der Webseite umfassen, und die gemergte Bilddatei und die abgeänderten Computerbefehle beim Schritt des Bereitstellens der gemergten Bilddatei und der abgeänderten Computerbefehle über ein drahtloses Netz an die mobile elektronische Vorrichtung gesendet werden.

12. Verfahren nach Anspruch 11, das einen Schritt des Weiterleitens der Anforderung der Webseite von der mobilen elektronischen Einrichtung an eine Inhaltsquelle umfasst.

13. Verfahren nach Anspruch 11 oder Anspruch 12, das einen Initialisierungsschritt des Konfigurierens eines Browsers in der mobilen elektronischen Vorrichtung umfasst, um die abgeänderten Computerbefehle zu verarbeiten.

14. Verfahren nach einem der Ansprüche 1 bis 10, wobei der Inhalt eine Anwendung für die mobile elektronische Vorrichtung (10) umfasst.

15. Drahtlosanschlusssystem (114) zum Herstellen einer Schnittstelle zwischen einer Inhaltsquelle (118, 122) und einem drahtlosen Netz (110), das eine Vielzahl mobiler elektronischer Vorrichtungen (10) verwaltet, wobei die Inhaltsquelle (118, 122) Inhalt (330, 450) bereitstellt, der (i) eine Vielzahl von Inhalt-Bilddateien (311, 454), von denen jede Graphikinformationen zum Generieren eines verknüpften Bilds umfasst, und (ii) Computerbefehle (310, 452) umfasst, die Referenzen zu der Vielzahl von Bilddateien zur Bewirkung dessen umfassen, dass die verknüpften Bilder auf einem Bildschirm (22) angezeigt werden, wobei das Drahtlosanschlusssystem Folgendes umfasst (114):
ein Datenumwandlungsmodul (116), das auf einem Computer zur Umwandlung von Inhalt in ein Format zur Kommunikation über das drahtlose Netz implementiert ist, wobei das Datenumwandlungsmodul Folgendes umfasst:
Auswahlmittel zum Auswählen einer Vielzahl von Bilddateien, die kombiniert werden können, um eine einzelne Bilddatei zu bilden, die eine kleinere Dateigröße als die Summe der Dateigrößen der ausgewählten Bilddateien aufweist, aus den Inhalt-Bilddateien (311, 454);
Kombinationsmittel zum Kombinieren der ausgewählten Bilddateien in einer einzelnen gemergten Bilddatei (313, 458); und
Abänderungsmittel zum Abändern der Computerbefehle (310, 452) zur Mitberücksichtigung der gemergten Bilddatei;
wobei das Drahtlosanschlusssystem (114) zum Senden der gemergten Bilddatei (313, 458) und der abgeänderten Computerbefehle (314, 456) über das drahtlose Netz an eine mobile elektronische Vorrichtung (10) konfiguriert ist.

16. System nach Anspruch 15, wobei das Auswahlmittel konfiguriert ist, um die mit den Inhalt-Bilddateien verknüpften Bilder zu analysieren, um Bilder mit einer in einen vorher bestimmten Ähnlichkeitsbereich hinsichtlich einer Zahl von Bildpunkten fallenden häufigen Dimension zu identifizieren, und die ausgewählten Bilddateien diejenigen sind, für die die verknüpften Bilder als eine häufige Dimension aufweisend identifiziert worden sind.

17. System nach Anspruch 15 oder Anspruch 16, wobei das Auswahlmittel konfiguriert ist, um die mit den Inhalt-Bilddateien verknüpften Bilder zu analysieren, um Bilder mit einer in einen vorher bestimmten Ähnlichkeitsbereich hinsichtlich einer Zahl von Bildpunkten fallenden häufigen Dimension und mit in einen vorher bestimmten Ähnlichkeitsbereich fallenden Farbenzusammenstellungen zu identifizieren, und die ausgewählten Bilddateien diejenigen sind, für die die verknüpften Bilder als eine häufige Dimension und in einen vorher bestimmten Ähnlichkeitsbereich fallende Farbenzusammenstellungen aufweisend identifiziert worden sind.

18. System nach einem der Ansprüche 15 bis 17, wobei das Kombinationsmittel konfiguriert ist, um die mit den ausgewählten Bilddateien verknüpften einzelnen Bilder in einem gemergten Bild zu kombinieren, das jedes der einzelnen Bilder in Unterbereichen davon umfasst, wobei die gemergte Bilddatei Graphikinformationen zum Generieren des gemergten Bilds umfasst.

19. System nach Anspruch 18, wobei das Abänderungsmittel zum Abändern der Computerbefehle konfiguriert ist, so dass jede Referenz zu einer der ausgewählten Bilddateien durch eine Referenz zu der gemergten Bilddatei ersetzt wird, die Informationen umfasst, die den Unterbereich in dem gemergten Bild identifizieren, das das mit der ausgewählten Bilddatei verknüpfte einzelne Bild umfasst.

20. Computerprogrammprodukt mit einem computerlesbaren Medium, das computerausführbare Befehle zum Modifizieren von Inhalt (300, 450) zur Verwendung in einer mobilen elektronischen Vorrichtung (10) verkörpert, wobei der Inhalt (i) eine Vielzahl von Inhalt-Bilddateien (311, 454), von denen jede Graphikinformationen zum Generieren eines verknüpften Bilds umfasst, und (ii) Computerbefehle (310, 452) umfasst, die Referenzen zu der Vielzahl von Bilddateien (311, 454) zur Bewirkung dessen umfassen, dass die verknüpften Bilder auf einem Bildschirm angezeigt werden; wobei die computerausführbaren Befehle ausführbare Befehle zum Durchführen des Verfahrens nach einem der Ansprüche 1 bis 14 umfassen.

## Revendications

1. Un procédé automatisé pour une utilisation sur un système de connexion sans fil (114) pour interfacer entre une source de contenu (118, 122) et un réseau sans fil (110) desservant une pluralité de dispositifs électroniques mobiles (10), le procédé automatisé pour modifier du contenu pour une utilisation sur un ou plusieurs des dispositifs électroniques mobiles (10) comportant :
recevoir, au niveau du système de connexion sans fil (114), du contenu (300, 450) de la source de contenu (118, 122) qui comporte (i) une pluralité de fichiers image de contenu (311, 454) comportant chacun des informations graphiques pour générer une image associée et (ii) des instructions informatiques (310, 452) comportant des références à la pluralité de fichiers image pour amener les images associées à être affichées sur un écran d'affichage (22) ;
sélectionner à partir des fichiers image de contenu (311, 454) une pluralité de fichiers image et combiner les fichiers image sélectionnés en un fichier image fusionné unique (313, 458) qui a une taille de fichier plus petite que la somme des tailles de fichier des fichiers image sélectionnés ;
modifier les instructions informatiques (310, 452) afin de supporter le fichier image fusionné ;
fournir le fichier image fusionné (313, 458) et les instructions informatiques modifiées (310, 452) à au moins un des dispositifs électroniques mobiles (10).

2. Le procédé de la revendication 1 dans lequel dans l'étape consistant à sélectionner et à combiner les images associées aux fichiers image de contenu (311, 454) sont analysées afin d'identifier les images ayant une dimension commune identique ou similaire, et les fichiers image sélectionnés sont ceux pour lesquels les images associées ont été identifiées comme ayant une dimension commune identique ou similaire.

3. Le procédé de la revendication 2 dans lequel la dimension commune comporte une largeur d'image d'axe x commune en pixels ou une hauteur d'image d'axe y commune en pixels.

4. Le procédé de n'importe laquelle des revendications 1 à 3 dans lequel dans l'étape consistant à sélectionner et à combiner les images associées aux fichiers image de contenu sont analysées afin d'identifier les images ayant une dimension commune identique ou similaire en pixels et ayant des combinaisons de couleurs présentant une similarité prédéterminée, et les fichiers image sélectionnés sont ceux pour lesquels les images associées ont été identifiées comme ayant une dimension commune identique ou similaire et des combinaisons de couleurs présentant une similarité prédéterminée.

5. Le procédé de n'importe laquelle des revendications 1 à 4 dans lequel ladite étape consistant à sélectionner et à combiner comporte la combinaison des images individuelles associées aux fichiers image sélectionnés en une image fusionnée (312, 334) qui comporte chacune des images individuelles dans les sous-régions de cette dernière, le fichier image fusionné (313, 458) comportant des informations graphiques pour générer l'image fusionnée.

6. Le procédé de la revendication 5 dans lequel l'étape consistant à modifier comporte la modification des instructions informatiques (310, 452) de sorte que chaque référence à un des fichiers image sélectionnés soit remplacée par une référence au fichier image fusionné (313, 458) comportant des informations identifiant la sous-région à l'intérieur de l'image fusionnée (312, 334) qui comporte l'image individuelle associée au fichier image sélectionné.

7. Le procédé de la revendication 6 dans lequel les informations identifiant les sous-régions comportent des données de coordonnées.

8. Le procédé de la revendication 6 comportant l'attribution d'un identifiant d'image unique à chaque image individuelle dans le fichier image fusionné et le mappage de chaque identifiant d'image dans la sous-région de l'image fusionnée qui comporte l'image individuelle à laquelle l'identifiant d'image a été attribué, où les identifiants d'image et les informations de mappage sont contenues dans le fichier image fusionné ; où les informations identifiant les sous-régions comportent les identifiants uniques.

9. Le procédé de n'importe laquelle des revendications 5 à 8 dans lequel les images individuelles ayant une hauteur commune sont fusionnées en une ligne dans l'image fusionnée.

10. Le procédé de la revendication 1 dans lequel ladite étape consistant à sélectionner et à combiner comporte l'analyse des images associées aux fichiers image de contenu afin d'identifier les images ayant une sous-région commune, et les fichiers image sélectionnés comportent ceux pour lesquels les images associées ont été identifiées comme ayant une sous-région commune ; et la combinaison des images individuelles associées aux fichiers image sélectionnés en une image fusionnée qui comporte seulement une occurrence unique de la sous-région commune.

11. Le procédé de n'importe laquelle des revendications 1 à 10 dans lequel le contenu comporte une page web, le procédé comportant une étape consistant à recevoir une requête pour la page web du dispositif électronique mobile, les instructions informatiques comportant du code pour un navigateur afin de rendre la page web et dans l'étape consistant à fournir le fichier image fusionné et les instructions informatiques modifiées le fichier image fusionné et les instructions informatiques modifiées sont envoyés au dispositif électronique mobile sur un réseau sans fil.

12. Le procédé de la revendication 11 comportant une étape consistant à relayer la requête pour la page web reçue du dispositif électronique mobile à une source de contenu.

13. Le procédé de la revendication 11 ou de la revendication 12 comportant une étape d'initialisation consistant à configurer un navigateur sur le dispositif électronique mobile afin de traiter les instructions informatiques modifiées.

14. Le procédé de n'importe laquelle des revendications 1 à 10 dans lequel le contenu comporte une application pour le dispositif électronique mobile (10).

15. Un système de connexion sans fil (114) pour interfacer entre une source de contenu (118, 122) et un réseau sans fil (110) desservant une pluralité de dispositifs électroniques mobiles (10), la source de contenu (118, 122) fournissant du contenu (300, 450) comportant (i) une pluralité de fichiers image de contenu (311, 454) comportant chacun des informations graphiques pour générer une image associée et (ii) des instructions informatiques (310, 452) comportant des références à la pluralité de fichiers image pour amener les images associées à être affichées sur un écran d'affichage (22), le système de connexion sans fil comportant (114) :
un module de conversion de données (116) implémenté sur un ordinateur pour convertir du contenu en un format propre à la communication sur le réseau sans fil, le module de conversion de données comportant :
un moyen de sélection pour sélectionner à partir des fichiers image de contenu (311, 454) une pluralité de fichiers image qui peuvent être combinés ensemble afin de former un fichier image unique qui aura une taille de fichier plus petite que la somme des tailles de fichier des fichiers image sélectionnés ;
un moyen de combinaison pour combiner les fichiers image sélectionnés en un fichier image fusionné unique (313, 458) ; et
un moyen de modification pour modifier les instructions informatiques (310, 452) afin de supporter le fichier image fusionné ;
le système de connexion sans fil (114) étant configuré pour envoyer le fichier image fusionné (313, 458) et les instructions informatiques modifiées (314, 456) sur le réseau sans fil à un dispositif électronique mobile (10).

16. Le système de la revendication 15 dans lequel le moyen de sélection est configuré pour analyser les images associées aux fichiers image de contenu afin d'identifier les images ayant une dimension commune présentant une similarité prédéterminée en nombre de pixels, et les fichiers image sélectionnés sont ceux pour lesquels les images associées ont été identifiées comme ayant une dimension commune.

17. Le système de la revendication 15 ou de la revendication 16 dans lequel le moyen de sélection est configuré pour analyser les images associées aux fichiers image de contenu afin d'identifier les images ayant une dimension commune présentant une similarité prédéterminée en nombre de pixels et ayant des combinaisons de couleurs présentant une similarité prédéterminée, et les fichiers image sélectionnés sont ceux pour lesquels les images associées ont été identifiées comme ayant une dimension commune et des combinaisons de couleurs présentant une similarité prédéterminée.

18. Le système de n'importe laquelle des revendications 15 à 17 dans lequel le moyen de combinaison est configuré pour combiner les images individuelles associées aux fichiers image sélectionnés en une image fusionnée qui comporte chacune des images individuelles dans les sous-régions de cette dernière, le fichier image fusionné comportant des informations graphiques pour générer l'image fusionnée.

19. Le système de la revendication 18 dans lequel le moyen de modification est configuré pour modifier les instructions informatiques de sorte que chaque référence à un des fichiers image sélectionnés soit remplacée par une référence au fichier image fusionné comportant des informations identifiant la sous-région à l'intérieur de l'image fusionnée qui comporte l'image individuelle associée au fichier image sélectionné.

20. Un produit de programme informatique ayant un support lisible par ordinateur incorporant des instructions exécutables par ordinateur pour modifier du contenu (300, 450) pour une utilisation sur un dispositif électronique mobile (10), le contenu comportant (i) une pluralité de fichiers image de contenu (311, 454) comportant chacun des informations graphiques pour générer une image associée et (ii) des instructions informatiques (310, 452) comportant des références à la pluralité de fichiers image (311, 454) pour amener les images associées à être affichées sur un écran d'affichage ; les instructions exécutables par ordinateur comportant des instructions exécutables pour implémenter le procédé de n'importe laquelle des revendications 1 à 14.
